# EUROPÄISCHE PATENTSCHRIFT

(11) **EP 3 189 385 B1**
(45) Veröffentlichungstag und Bekanntmachung des Hinweises auf die Patenterteilung: **13.10.2021**
(21) Anmeldenummer: 15791486.2
(22) Anmeldetag: 28.08.2015
(51) Int. Cl.: G05B 19/418

(54) **SYSTEM ZUM ERSTELLEN VON STEUERUNGSDATENSÄTZEN FÜR ROBOTER**
SYSTEM FOR GENERATING SETS OF CONTROL DATA FOR ROBOTS
SYSTÈME DE CRÉATION D'ENREGISTREMENTS DE DONNÉES DE COMMANDE POUR DES ROBOTS

(30) Priorität: 02.09.2014 DE 102014112639
(43) Veröffentlichungstag der Anmeldung: 12.07.2017
(73) Patentinhaber: Cavos Bagatelle Verwaltungs GmbH & Co. KG, 80538 München (DE)
(72) Erfinder: HADDADIN, Sami, 30173 Hannover (DE)
(74) Vertreter: Rösler, Frank
(86) Internationale Anmeldenummer: PCT/DE2015/100356
(87) Internationale Veröffentlichungsnummer: WO 2016/034167

(56) Entgegenhaltungen:
- WO-A1-2013/143585
- US-A1- 2006 167 917
- US-A1- 2009 112 350
- US-A1- 2013 144 409
- YAMAMOTO M ET AL: "Collision free minimum time trajectory planning for manipulators using global search and gradient method", INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, Bd. 3, 12. September 1994 (1994-09-12), Seiten 2184-2191, XP010142009, DOI: 10.1109/IROS.1994.407564 ISBN: 978-0-7803-1933-2
- None

## Beschreibung

Die Erfindung betrifft ein System zum Erstellen bzw. Optimieren von Steuerungsdatensätzen, die eine Steuerung und/oder Regelung eines Roboters zur Erfüllung von konkreten Aufgaben durch diesen Roboter definieren. Weiterhin betrifft die Erfindung ein Verfahren zum Betrieb eines ebensolchen Systems.

Der Begriff "Steuerungsdatensatz" umfasst vorliegend Steuer- und/oder Regelungsdaten, bzw. Steuer- und/oder Regelungskommandos bzw. Steuer- und/oder Regelungsprogramme und Mischformen daraus. Durch Umsetzung des jeweiligen Steuerungsdatensatzes durch den Roboter erfolgt eine gezielte Beeinflussung von physikalischen oder anderen Größen des Roboters, wodurch der Roboter eine mit dem jeweiligen Steuerungsdatensatz verbundene Aufgabe löst, bspw. einen Fertigungsschritt an einem Montageband oder eine Handhabung eines Objekts ausführt. Die Begriffe "Steuerung" und "Regelung" werden dabei in ihrem fachüblichen Sinn verwendet.

Roboter werden heute an sich immer komplexer und können damit auch zunehmend komplexere Aufgaben erfüllen. Entsprechend werden die zur Erfüllung solcher komplexen Aufgaben erforderlichen Steuerungsdatensätze zur Steuerung/Regelung der Roboter ebenfalls zunehmend komplexer. Die zunehmende Vernetzung von Robotern und die Weiterentwicklung von sogenannten "Multiagentensystemen" erlauben heute zudem kollektive Lösungen zur Erstellung von Steuerungsdatensätzen.

Aus der US 2009/0112350 A1 ist ein System zur Erzeugung von Steuerkommandos für eine Vielzahl von Produktionseinheiten, die zur Herstellung eines Endprodukts zusammenwirken, bekannt.

Aus der US 2013/0144409 A1 ist eine Vorrichtung zur Erzeugung von Steuerprogrammen bekannt.

Aus der US 2006/0167917 A1 ist ein System zur Steuerung und Verwaltung von intelligenten mobilen Software-Agenten bekannt.

Aus der WO 2013/143585 A1 ist eine Vorrichtung zur Unterstützungbei der Erstellung energieeffizienten Steuerungssequenz bekannt.

Die Aufgabe der Erfindung ist es, ein System anzugeben, dass es erlaubt, optimierte Steuerungsdatensätze zur Steuerung und/oder Regelung von vernetzten Robotern zu ermitteln.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung sowie der Erläuterung von Ausführungsbeispielen der Erfindung, die in den Figuren dargestellt sind.

Die Aufgabe ist mit einem System zum Erstellen von optimierten Steuerungsdatensätzen für vernetzte Roboter gelöst. Das vorgeschlagene System umfasst mehrere Roboter Rᵢ, mit i = 1, 2, 3, ..., n, und n ≥ 2, einen Optimierer OE, und eine Datenbank DB, die über ein Datennetz miteinander vernetzt sind.

Die Vernetzung der Roboter Rᵢ, des Optimierers OE und der Datenbank DB ist vorzugsweise als Internet-basiertes Datennetz bzw. Kommunikationsnetz ausgestaltet. Die Vernetzung kann drahtgebunden oder drahtungebunden (bspw. mittels Funkverbindung) oder als Mischform realisiert sein.

Der Begriff "Roboter" wird vorliegend weit gefasst verstanden. Er umfasst insbesondere: Roboter mit zumindest einer steuerbaren bzw. regelbaren Einheit, wie bspw. einem Manipulator, einem Effektor, einem Antriebselement, einem Aktuator, einem Element zur Fortbewegung, einem Sensor. Weiterhin umfasst der Begriff "Roboter" insbesondere ansteuerbare oder regelbare Roboter mit lokaler oder verteilter Intelligenz, Humanoide, selbstlernende Roboter, semiautonom- und autonom agierende Roboter, flugfähige Roboter (Drohnen), schwimmfähige Roboter, tauchfähige Roboter, fahrfähige Roboter (autonomer Straßenverkehr), medizinisch nutzbare Roboter (bspw. OP-Roboter) und insbesondere Kombinationen daraus.

Das vorgeschlagene System zeichnet sich weiterhin dadurch aus, dass jeder Roboter Rᵢ zumindest aufweist: eine Steuereinheit SEᵢ zur Steuerung und/oder zur Regelung des Roboters Rᵢ; eine Speichereinheit SPEᵢ welche Steuerungsdatensätzen SDᵢ(Aₖ), die jeweils die Steuerung des Roboters Rᵢ entsprechend einer vorgegebenen Aufgabe Aₖ ermöglichen, mit k = 0, 1, 2, ..., m speichert; eine Einheit EEᵢ zur Vorgabe einer neuen Aufgabe Aₘ₊₁ für den Roboter Rᵢ, wobei gilt Aₘ₊₁ ≠ Aₖ; eine Einheit EHᵢ zur Ermittlung eines Steuerungsdatensatzes SDᵢ(Aₘ₊₁) zur Ausführung der neuen Aufgabe Aₘ₊₁ durch den Roboter Rᵢ, eine Bewertungseinheit BEᵢ, die den von der Einheit EHᵢ ermittelten Steuerungsdatensatz SDᵢ(Aₘ₊₁) hinsichtlich zumindest eines Parameters P1 mit der Kennzahl K_{P1}(SDᵢ(Aₘ₊₁)) bewertet, und eine Kommunikationseinheit KEᵢ zur Kommunikation mit dem Optimierer OE und/oder der Datenbank DB und/oder anderen Robotern R_{j≠i}.

Die Steuereinheit SEᵢ ist vorteilhaft mit ansteuerbaren und/oder regelbaren Einheiten des Roboters Rᵢ verbunden. Sie umfasst vorzugsweise einen Prozessor zur Ausführung der Steuerungsdatensätze SDᵢ, beziehungsweise von basierend auf den Steuerungsdatensätzen SDᵢ erzeugten ausführbaren Programmen.

Ein Steuerungsdatensatz SDᵢ erlaubt bzw. definiert eine konkrete Steuerung/Regelung des jeweiligen Roboters Rᵢ derart, dass bei Ausführung der Befehle des Steuerungsdatensatzes SDᵢ(Aₖ) die Aufgabe Aₖ erfüllt ist. Der Begriff "Steuerdatensatz" wird vorliegend weit gefasst verstanden, er umfasst bspw. Steuerbefehle, logische Syntax, Parameter, Formeln, Daten, etc.

Die Steuerungsdatensätze SDᵢ(Aₖ) sind für jeden Roboter vorzugsweise lokal, d.h. am Ort des Roboters, auf der Speichereinheit SPEᵢ gespeichert. Die Speichereinheit SPEᵢ kann bspw. ein handelsüblicher Massenspeicher sein.

Der Begriff "Aufgabe Aₖ" wird vorliegend breit gefasst verstanden. Die Aufgabe Aₖ kann beispielsweise darin bestehen, den mechanischen, elektrischen und/oder sonstigen Zustand des Roboters Rᵢ in vorbestimmter Weise zu ändern und/oder durch Einwirkung des Roboters Rᵢ auf seine Umwelt, den Zustand der Umwelt in vorbestimmter Weise zu ändern.

### Beispiel:

Eine Aufgabe kann in einem einfachen Fall bspw. darin bestehen, ein Objekt mit einem Greifarm des Roboters an einer Position P1 aufzunehmen, es an eine Position P2 zu verbringen und dort abzulegen. Allein für diese einfache Aufgabe gibt es eine Vielzahl von möglichen Steuerungsdatensätzen, die diese Aufgabe grundsätzlich erfüllen. Die Vielzahl von möglichen Steuerungsdatensätzen ergibt sich bspw. dadurch, dass zwischen den Punkten P1 und P2 unterschiedlichste Wege/Trajektorien unterschiedlich schnell oder langsam zurückgelegt werden können, etc..

Es wird vorliegend davon ausgegangen, dass ein Steuerungsdatensatz SDᵢ(Aₖ) typischerweise eine Variante von mehreren möglichen Varianten zur Lösung der Aufgabe Aₖ angibt. D.h. eine Aufgabe Aₖ für den Roboter Rᵢ kann auch mit den Steuerungsdatensätzen SDᵢ(Aₖ)', SDᵢ(Aₖ)", SDᵢ(Aₖ)"', ... gelöst werden, wobei die Anzahl der Hochkommas jeweils unterschiedliche Varianten des Steuerungsdatensatzes kennzeichnen. So kann sich, um im vorigen Beispiel zu bleiben, SDᵢ(Aₖ)' und SDᵢ(Aₖ)" beispielsweise in der Geschwindigkeit unterscheiden, mit der der Greifarm zwischen den Positionen P1 und P2 verfahren wird.

Dem Roboter Rᵢ sind vorliegend für eine Anzahl von m Aufgaben Aₖ entsprechend eine Anzahl von m Steuerungsdatensätzen SDᵢ(Aₖ) bekannt, wobei jeder Steuerungsdatensatz SDᵢ(Aₖ) die Aufgabe Aₖ löst. Jeder Roboter Rᵢ verfügt damit über einen eigenen lokalen Fundus an Steuerungsdatensätzen SDᵢ(Aₖ) zur Lösung bestimmter Aufgaben Aₖ.

Die Einheit EEᵢ zur (lokalen) Vorgabe einer neuen, unbekannten, d.h. noch nicht gelösten Aufgabe Aₘ₊₁ für den Roboter Rᵢ, weist vorzugsweise ein haptisches, akustisches und/oder ein optisches Eingabeinterface auf, mittels dem ein Nutzer die neue Aufgabe Aₘ₊₁ ein- bzw. vorgeben kann.

Um wiederum im vorherigen Beispiel zu bleiben, kann eine solche neue Aufgabe Aₘ₊₁ bspw. darin bestehen, das Objekt nicht an P2, sondern an P3 abzulegen, mit P2 ≠ P3. Alternativ oder zusätzlich kann die Einheit EEᵢ ein elektronisches Dateninterface aufweisen, über das die neue Aufgabe Aₘ₊₁ bspw. per Computer vorgegeben werden können.

Die Einheit EHᵢ ist vorteilhaft mit der Einheit EEᵢ verbunden und umfasst bevorzugt einen Prozessor und eine Programmierung, die es erlaubt, auf Basis einer für den Roboter Rᵢ entsprechend vorgegebenen neuen Aufgabe Aₘ₊₁ einen Steuerungsdatensatz SDᵢ(Aₘ₊₁) zur Ausführung der neuen Aufgabe Aₘ₊₁ zu ermitteln. Vorzugsweise ist die Einheit EHᵢ selbstlernend ausgeführt und eingerichtet. Vorteilhaft erfolgt das Ermitteln des Steuerungsdatensatzes SDᵢ(Aₘ₊₁) automatisiert. Weiterhin vorteilhaft erfolgt die Ermittlung des Steuerungsdatensatzes SDᵢ(Aₘ₊₁) durch die Einheit EHᵢ auf Basis der Steuerungsdatensätze SDᵢ(Aₖ) für k = 0 bis m. Das bedeutet, dass bereits ermittelte und damit lokal bekannte Steuerungsdatensätze SDᵢ(Aₖ) als Ausgangsbasis für die Erstellung des Steuerungsdatensatzes SDᵢ(Aₘ₊₁) herangezogen werden und beispielsweise der Steuerungsdatensatzes SDᵢ(Aₘ₊₁) durch eine entsprechende Variation eines oder mehrerer der bekannten Steuerungsdatensätze SDᵢ(Aₖ) an die neue Aufgabe Aₘ₊₁ ermittelt wird. Die Einheit EHᵢ ermöglicht es mithin für den Roboter Rᵢ mit der lokal vorhandenen Rechenleistung Steuerungsdatensätze SDᵢ(Aₘ₊₁) zur Ausführung/Erfüllung neuer Aufgabe Aₘ₊₁ zu ermitteln.

Die Bewertungseinheit BEᵢ ist vorteilhaft mit der Einheit EHᵢ verbunden und umfasst bevorzugt einen Prozessor und eine Programmierung, die es erlaubt, den von der Einheit EHᵢ ermittelten Steuerungsdatensatz SDᵢ(Aₘ₊₁) hinsichtlich zumindest eines Parameters P1 mit der Kennzahl K_{P1}(SDᵢ(Aₘ₊₁)) zu bewerten. Ein solcher Parameter P1 kann bspw. der Energieaufwand oder die Zeit sein, die der Roboter Rᵢ benötigt, um die durch den Steuerungsdatensatz SDᵢ(Aₘ₊₁) definierten Ablauf vollständig oder teilweise umzusetzen. Die Kennzahl K_{P1}(SDᵢ(Aₘ₊₁)) kann vorzugsweise als Qualitätsmaß verstanden werden, das die Qualität des Steuerungsdatensatz SDᵢ(Aₘ₊₁) hinsichtlich des Parameters P1 angibt. Natürlich sind eine Vielzahl anderer Parameter P1 denkbar, die je nach Anwendung oder Anforderungen alternativ oder zusätzlich gewählt werden können. Insbesondere kann der Parameter P1 auch eine Kombinationen verschiedener (Unter-) Parameter, d.h. ein Parametervektor sein. Vorteilhaft werden die Kennzahlen K_{P1}(SDᵢ(Aₖ)) in den lokalen Speichereinheit SEᵢ gespeichert und stehen somit für eine weitere Nutzung bereit.

Die Kommunikationseinheit KEᵢ dient der Kommunikation mit dem Optimierer OE und/oder der Datenbank DB und/oder anderen Robotern R_{j≠i}, und ist vorteilhaft als digitale Kommunikationsschnittstelle ausgebildet.

Das vorgeschlagene System zeichnet sich weiterhin dadurch aus, dass der Optimierer OE dazu ausgeführt und eingerichtet ist, nach Anforderung durch einen Roboter Rᵢ einen zumindest hinsichtlich eines vorgegebenen Parameters P2 optimierten Steuerungsdatensatz SD_{i,P2}(Aₘ₊₁) der neuen Aufgabe Aₘ₊₁ zu ermitteln, wobei die Anforderung durch den Roboter Rᵢ dann erfolgt, sofern die Kennzahl K_{P1}(SDᵢ(Aₘ₊₁)) einer vorgegebenen Bedingung nicht genügt, und wobei eine Rechenleistung und ein Parallelisierungsgrad des Optimierers OE um ein Vielfaches höher ist als eine Rechenleistung und ein Parallelisierungsgrad einer Einheit EHᵢ. Mit anderen Worten, falls der von der Einheit EHᵢ ermittelte Steuerungsdatensatzes SDᵢ(Aₘ₊₁) hinsichtlich des Parameters P1 nicht die erforderliche Qualität (Kennzahl K_{P1}(SDᵢ(Aₘ₊₁)) genügt nicht einer vorgegebenen Bedingung) aufweist, dann wird vom Optimierer ein hinsichtlich des Parameters P2 optimierter Steuerungsdatensatz SD_{i,P2}(Aₘ₊₁) der neuen Aufgabe Aₘ₊₁ ermittelt.

Der Optimierer OE kann als Einheit mit zumindest einem Prozessor und einer entsprechenden Programmierung im Datennetz realisiert sein. Die Rechenleistung und der Parallelisierungsgrad des Optimierers ist erfindungsgemäß um ein Vielfaches höher als die Rechenleistung und der Parallelisierungsgrad einer Einheit EHᵢ. Der Optimierer OE kann alternativ als kollaboratives Agentensystem im Datennetz ausgebildet sein, das zumindest die Einheiten EHᵢ als Agenten umfasst, wobei die Ermittlung des optimierten Steuerungsdatensatzes SD_{i,P2}(Aₘ₊₁) der neuen Aufgabe Aₘ₊₁ in einer, mehrerer oder allen Einheiten EHᵢ erfolgt. Letztere Variante nutzt verteilte Rechenkapazitäten zur Lösung von komplexen Optimierungsaufgaben im Rahmen eines sogenannten "Cloud-Computing".

Vorzugsweise ist der Optimierer OE selbstlernend ausgebildet, d.h. er nutzt vorhandenes Wissen, um neue Optimierungsaufgaben zu lösen, bspw. bereits von ihm ermittelte Steuerungsdatensätze SD_{i,P2}(Aₖ), und ggf. zugeordnet ermittelte Kennzahlen K_{P2}(SDᵢ(Aₖ)). Vorteilhaft sind dem Optimierer OE auch die Steuerungsdatensätze SDᵢ(Aₖ) der lokalen Roboter Rᵢ bekannt und werden zur Ermittlung der Steuerungsdatensätze SD_{i,P2}(Aₖ) verwendet. Somit erfolgt die Ermittlung des optimierten Steuerungsdatensatzes SD_{i,P2}(Aₘ₊₁) vorteilhaft auf Basis bereits vom Optimierer OE ermittelter optimierter Steuerungsdatensätze SD_{i,P2}(Aₖ), mit k ≤ m, und/oder bekannter Steuerungsdatensätze SDᵢ(Aₖ), mit k ≤ m.

In einer vorteilhaften Weiterbildung des vorgeschlagenen Systems sind die Parameter P1 und P2 identisch. In diesem Fall wird ein Steuerdatensatz hinsichtlich eines einheitlichen Parameters, bspw. des Energieverbrauch des Roboters, optimiert. Vorteilhaft ist der Parameter P1 und/oder der Parameter P2 ein Teilenergieverbrauch oder ein Gesamtenergieverbrauch des Roboters bei der Ausführung des jeweiligen Steuerungsdatensatzes SDᵢ, oder eine Teil- oder Gesamtzeitdauer, die der Roboter zur Ausführung der jeweiligen Steuerdaten SDᵢ benötigt, oder eine Kombination daraus. Natürlich sind je nach Anwendung und Anforderung andere Größen und/oder Parameterkombinationen denkbar.

### Beispiel:

Es sei P1 = P2 der Gesamtenergieverbrauch des Roboters bei der Ausführung eines kompletten Steuerungsdatensatzes SDᵢ(Aₘ₊₁). Weiterhin sei die Kennzahl K_{P1}(SDᵢ(Aₘ₊₁)), eine Kennzahl, die den Gesamtenergieverbrauch des Roboters bei der Ausführung des kompletten Steuerungsdatensatzes SDᵢ(Aₘ₊₁) angibt. Die Kennzahl K_{P1}(SDᵢ(Aₘ₊₁)) sei größer als ein vorgegebener Grenzwert, (d.h. die Umsetzung des Steuerungsdatensatzes SDᵢ(Aₘ₊₁) ist Energie-ineffizienter), so dass durch den jeweiligen Roboter Rᵢ eine Anforderung an den Optimierer OE erfolgt, einen hinsichtlich des Gesamtenergieverbrauchs P2 optimierten Steuerungsdatensatz SD_{i,P2}(Aₘ₊₁) zu ermitteln. Dies kann auf unterschiedliche Arten umgesetzt werden. So kann der Optimierer OE den optimierten Steuerungsdatensatz SD_{i,P2}(Aₘ₊₁) auf Basis des von der Einheit EHᵢ zuvor ermittelten Steuerungsdatensatzes SDᵢ(Aₘ₊₁) ermitteln. Alternativ kann der Optimierer OE den optimierten Steuerungsdatensatz SD_{i,P2}(Aₘ₊₁) auf Basis der vorgegebenen Aufgabe Aₘ₊₁, und der Vorgabe, den zu ermittelnden Steuerungsdatensatz SD_{i,P2}(Aₘ₊₁) unter der Bedingung einer Optimierung des Parameters P2 zu ermitteln, neu ermitteln. Bei letzterer Alternative werden vorteilhaft der Steuerungsdatensatz SDᵢ(Aₘ₊₁) und die Kennzahl K_{P1}(SDᵢ(Aₘ₊₁)) bei der Ermittlung verwendet. Vorteilhaft erfolgt die Ermittlung des optimierten Steuerungsdatensatzes SD_{i,P2}(Aₘ₊₁) durch den Optimierer OE daher unter Nutzung der auf den Speichereinheiten SPEᵢ gespeicherten Steuerungsdatensätze SDᵢ(Aₖ) mit k = 0, 1, ..., m und/oder der auf der Speichereinheiten SPEᵢ gespeicherten Kennzahl K_{P1}(SDᵢ(Aₘ₊₁)).

Vorteilhaft ist die Einheit EHᵢ weiterhin derart ausgeführt und eingerichtet, dass die Ermittlung des Steuerungsdatensatzes SDᵢ(Aₘ₊₁) auf Basis von Kennzahlen K_{P1}(SDᵢ(Aₖ)) erfolgt, die für die Steuerungsdatensätze SDᵢ(Aₖ), mit k = 0, 1, ..., m, ermittelt wurden. Das ermöglicht vorteilhaft insbesondere solche Steuerungsdatensätze SDᵢ(Aₖ) zur Ermittlung des Steuerungsdatensatzes SDᵢ(Aₘ₊₁) heranzuziehen, die bereits bestimmte Kennzahlen aufweisen, und somit bspw. einen besonders geringen Energiebedarf zur Umsetzung des Vorgangs oder einen besonders geringen Zeitaufwand für die vollständige Ausführung/Umsetzung des Vorgangs durch den Roboter Rᵢ aufweisen.

Schließlich wird das vorgeschlagene System dadurch gekennzeichnet, dass die Datenbank DB den von der Optimierungseinheit OE optimierten Steuerungsdatensatz SD_{i,P2}(Aₘ₊₁) speichert, und zur Ausführung der neuen Aufgabe Aₘ₊₁ an den Roboter Rᵢ bereitstellt.

Vorteilhaft umfasst auch der Optimierer OE eine Bewertungseinheit BE_{OPT}, die den vom Optimierer OE ermittelten optimierten Steuerungsdatensatz SD_{i,P2}(Aₘ₊₁) hinsichtlich zumindest eines Parameters P2 mit der Kennzahl K_{P2}(SDᵢ(Aₘ₊₁)) bewertet.

Das vorgeschlagene System ermöglicht somit eine Optimierung eines lokal, d.h. am Ort eines Roboters Rᵢ erzeugten Steuerungsdatensatzes SDᵢ(Aₘ₊₁) hinsichtlich eines Parameters P2 durch einen speziell für diese Aufgabe eingerichteten und ausgelegten Optimierer OE. Der Optimierer OE hat vorzugsweise Zugriff auf alle im (ggf. weltweiten) Datennetz bereits bekannten Steuerungsdatensätze SDᵢ(Aₖ), SD_{i,P2}(Aₖ) und zugeordnete Kennzahlen K_{P1}(SDᵢ(Aₖ)), K_{P2}(SDᵢ(Aₖ)). Der Optimierer ist in einer vorzugsweisen Variante derart ausgebildet, dass das Ermitteln des optimierten Steuerungsdatensatz SD_{i,P2}(Aₘ₊₁) im Rahmen des sogenannten "Cloud-Computing" erfolgt. So kann Wissen anderer, ggf. weltweit verteilter Roboter Rᵢ zu Steuer- bzw. Regelungsdatensätzen genutzt werden.

Die Datenbank DB umfasst vorzugsweise die Speichereinheiten SPEᵢ. Die Datenbank DB kann eine oder mehrere im Datennetz verteilte digitale Speichereinheiten SPEᵢ umfassen.

Die Erfindung betrifft weiterhin ein Verfahren zum Betrieb eines Systems, aufweisend mehrere Roboter Rᵢ, mit i = 1, 2, 3, ..., n, und n ≥ 2, einen Optimierer OE, eine Datenbank DB, die über ein Datennetz zum Datenaustausch miteinander vernetzt sind, wobei eine Steuereinheit SEᵢ den Roboter Rᵢ steuert; eine Speichereinheit SPEᵢ des Roboters Rᵢ Steuerungsdatensätze SDᵢ(Aₖ) speichert, die jeweils die Steuerung des Roboters Rᵢ entsprechend einer vorgegebenen Aufgabe Aₖ ermöglichen, mit k = 0, 1, 2, ..., m; über eine Einheit EEᵢ des Roboters Rᵢ eine neue Aufgabe Aₘ₊₁ für den Roboter Rᵢ vorgebbar ist, wobei gilt: Aₘ₊₁ ≠ Aₖ; eine Einheit EHᵢ des Roboters Rᵢ einen Steuerungsdatensatz SDᵢ(Aₘ₊₁) zur Ausführung der neuen Aufgabe Aₘ₊₁ ermittelt, eine Bewertungseinheit BEᵢ, die den von der Einheit EHᵢ ermittelten Steuerungsdatensatz SDᵢ(Aₘ₊₁) hinsichtlich zumindest eines Parameters P1 mit der Kennzahl K_{P1}(SDᵢ(Aₘ₊₁)) bewertet, der Optimierer OE nach Anforderung durch einen Roboter Rᵢ zumindest einen hinsichtlich eines vorgegebenen Parameters P2 optimierten Steuerungsdatensatz SD_{i,P2}(Aₘ₊₁) der neuen Aufgabe Aₘ₊₁ ermittelt, wobei die Anforderung durch den Roboter Rᵢ dann erfolgt, wenn die Kennzahl K_{P1}(SDᵢ(Aₘ₊₁)) einer vorgegebenen Bedingung nicht genügt, wobei eine Rechenleistung und ein Parallelisierungsgrad des Optimierers OE um ein Vielfaches höher ist als eine Rechenleistung und ein Parallelisierungsgrad einer Einheit EHᵢ, und die Datenbank DB die den von dem Optimierer OE optimierten Steuerungsdatensatz SD_{i,P2}(Aₘ₊₁) speichert und zur Ausführung der neuen Aufgabe Aₘ₊₁ an den Roboter Rᵢ bereitstellt.

Vorteile und vorteilhafte Fortbildungen des Verfahrens ergeben sich durch analoge und sinngemäße Übertragung der vorstehend in Zusammenhang mit dem vorgeschlagenen System gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

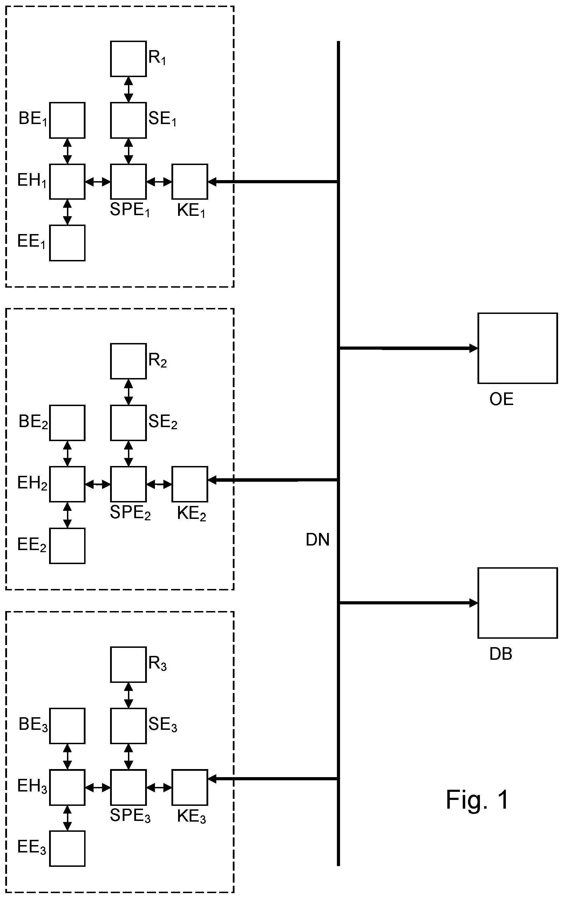

- Fig. 1: einen schematisierten Aufbau einer Variante des vorgeschlagenen Systems.

**Fig. 1** zeigt einen schematisierten Aufbau einer Variante des vorgeschlagenen Systems zum Erstellen von Steuerungsdatensätzen für vernetzte Roboter, aufweisend drei Roboter R₁, R₂, R₃, einen Optimierer OE und eine Datenbank DB, die über ein Datennetz DN miteinander vernetzt sind. Jeder der Roboter Rᵢ mit i = 1, 2, 3 weist auf: eine Steuereinheit SEᵢ zur Steuerung und oder Regelung des Roboters Rᵢ; eine Speichereinheit SPEᵢ zur Speicherung von Steuerungsdatensätzen SDᵢ(Aₖ), die jeweils die Steuerung des Roboters Rᵢ entsprechend einer vorgegebenen Aufgabe Aₖ ermöglichen, mit k = 0, 1, 2, ..., m; eine Einheit EEᵢ zur Vorgabe einer neuen Aufgabe Aₘ₊₁ für den Roboter Rᵢ, wobei gilt Aₘ₊₁ ≠ Aₖ; eine Einheit EHᵢ zur Ermittlung eines Steuerungsdatensatzes SDᵢ(Aₘ₊₁) zur Ausführung der Aufgabe Aₘ₊₁ durch den Roboter Rᵢ, eine Bewertungseinheit BEᵢ, die den von der Einheit EHᵢ ermittelten Steuerungsdatensatz SDᵢ(Aₘ₊₁) hinsichtlich zumindest eines Parameters P1 mit der Kennzahl K_{P1}(SDᵢ(Aₘ₊₁)) bewertet, und eine Kommunikationseinheit KEᵢ zur Kommunikation mit dem Optimierer OE und/oder der Datenbank DB und/oder anderen Robotern R_{j≠i}. Die Datenkommunikation zwischen dem jeweiligen Roboter Rᵢ und den ihm zugeordneten lokalen Einheiten (SEᵢ, SPEᵢ, EHᵢ, EEᵢ, BEᵢ und KEᵢ) ergibt sich in diesem Ausführungsbeispiel entsprechend der dargestellten Pfeile.

Der Optimierer OE ist dazu ausgeführt und eingerichtet, nach Anforderung durch einen Roboter Rᵢ einen zumindest hinsichtlich eines vorgegebenen Parameters P2 optimierten Steuerungsdatensatz SD_{i,P2}(Aₘ₊₁) zu ermitteln, wobei die Anforderung durch den Roboter Rᵢ dann erfolgt, sofern die Kennzahl K_{P1}(SDᵢ(Aₘ₊₁)) einer vorgegebenen Bedingung nicht genügt. Die Datenbank DB, speichert die vom Optimierer OE optimierten Steuerungsdatensätze SD_{i,P2}(Aₘ₊₁) und stellt diese zur Ausführung der Aufgabe Aₘ₊₁ an den Roboter Rᵢ bereit.

## Patentansprüche

1. System zum Erstellen von optimierten Steuer- und/oder Regelungskommandos für vernetzte Roboter, aufweisend mehrere Roboter Rᵢ, mit i = 1, 2, 3, ..., n, und n ≥ 2, einen Optimierer OE und eine Datenbank DB, die über ein Datennetz miteinander vernetzt sind, wobei
- jeder Roboter Rᵢ zumindest aufweist: eine Steuereinheit SEᵢ zur Steuerung und oder Regelung des Roboters Rᵢ; eine Speichereinheit SPEᵢ,, in welcher Steuer- und/oder Regelungskommandos SDᵢ(Aₖ), die jeweils die Steuerung des Roboters Rᵢ entsprechend einer vorgegebenen Aufgabe Aₖ ermöglichen, mit k = 0, 1, 2, ..., m gespeichert sind; eine Einheit EEᵢ zur Vorgabe einer neuen Aufgabe Aₘ₊₁ für den Roboter Rᵢ, wobei gilt Aₘ₊₁ ≠ Aₖ; eine Einheit EHᵢ zur Erzeugung von Steuer- und/oder Regelungskommandos SDᵢ(Aₘ₊₁) zur Ausführung der neuen Aufgabe Aₘ₊₁ durch den Roboter Rᵢ, eine Bewertungseinheit BEᵢ, die die von der Einheit EHᵢ ermittelten Steuer- und/oder Regelungskommandos SDᵢ(Aₘ₊₁) hinsichtlich zumindest eines Parameters P1 mit der Kennzahl K_{P1}(SDᵢ(Aₘ₊₁)) bewertet, und eine Kommunikationseinheit KEᵢ zur Kommunikation mit dem Optimierer OE und/oder der Datenbank DB und/oder anderen Robotern R_{j≠i}, wobei der Roboter Rᵢ dazu eingerichtet und ausgeführt ist, eine Anforderung zur Optimierung der Steuer- und/oder Regelungskommandos SDᵢ(Aₘ₊₁) an den Optimierer OE zu stellen, sofern die Kennzahl K_{P1}(SDᵢ(Aₘ₊₁)) einer vorgegebenen Bedingung nicht genügt,
- der Optimierer OE, dazu ausgeführt und eingerichtet ist, nach Anforderung durch einen Roboter Rᵢ zumindest hinsichtlich eines vorgegebenen Parameters P2 optimierte Steuer- und/oder Regelungskommandos SD_{i,P2}(Aₘ₊₁) der neuen Aufgabe _{Am+1} zu ermitteln, wobei eine Rechenleistung und ein Parallelisierungsgrad des Optimierers um ein Vielfaches höher ist als eine Rechenleistung und ein Parallelisierungsgrad einer Einheit EHᵢ, und
- die Datenbank DB, die die vom Optimierer OE optimierten Steuer- und/oder Regelungskommandos SD_{i,P2}(Aₘ₊₁) speichert und an den Roboter Rᵢ bereitstellt, wobei der Roboter Rᵢ die neue Aufgabe Aₘ₊₁ mit den Steuer- und/oder Regelungskommandos SD_{i,P2}(Aₘ₊₁) ausführt.

2. System nach Anspruch 1,
bei dem der Parameter P1 und der Parameter P2 identisch sind.

3. System nach Anspruch 1 oder 2,
bei dem der Parameter P1 und/oder der Parameter P2 ein Teilenergieverbrauch oder ein Gesamtenergieverbrauch des Roboters bei der Ausführung des jeweiligen Steuer- und/oder Regelungskommandos SDᵢ, oder eine Gesamtzeitdauer, die der Roboter zur Ausführung der jeweiligen Steuer- und/oder Regelungskommandos SDᵢ benötigt, oder eine Kombination daraus ist.

4. System nach einem der Ansprüche 1 bis 3,
bei dem die Einheit EHᵢ jeweils selbstlernend ausgeführt und eingerichtet ist, wobei die Erzeugung der Steuer- und/oder Regelungskommandos SDᵢ(Aₘ₊₁) auf Basis der Steuer- und/oder Regelungskommandos SDᵢ(Aₖ) für k = 0 bis m erfolgt.

5. System nach Anspruch 4,
bei dem die Einheit EHᵢ derart ausgeführt und eingerichtet ist, dass die Erzeugung der Steuer- und/oder Regelungskommandos SDᵢ(Aₘ₊₁) auf Basis der Kennzahlen K(SDᵢ(Aₖ)) erfolgt.

6. System nach einem der Ansprüche 1 bis 5,
bei dem der Optimierer OE selbstlernend ausgebildet ist, wobei die Ermittlung der optimierten Steuer- und/oder Regelungskommandos SD_{i,P2}(Aₘ₊₁) auf Basis bereits ermittelter optimierter Steuer- und/oder Regelungskommandos SD_{i,P2} erfolgt.

7. System nach einem der Ansprüche 1 bis 6,
bei dem der Optimierer OE als kollaboratives Agentensystem im Datennetz ausgebildet ist, das zumindest die Einheiten EHᵢ als Agenten umfasst, wobei die Erzeugung der optimierten Steuer- und/oder Regelungskommandos SD_{i,P2}(Aₘ₊₁) in einer, mehrerer oder allen Einheiten EHᵢ erfolgt.

8. System nach einem der Ansprüche 1 bis 7,
bei dem die Erzeugung der optimierten Steuer- und/oder Regelungskommandos SD_{i,P2}(Aₘ₊₁) durch den Optimierer OE unter Nutzung der auf den Speichereinheiten SPEᵢ gespeicherten Steuer- und/oder Regelungskommandos SDᵢ(Aₖ) mit k = 0, 1, ..., m erfolgt.

9. System nach einem der Ansprüche 1 bis 8,
bei dem in den Speichereinheit SPEᵢ die Kennzahlen K_{P1}(SDᵢ(Aₖ)) gespeichert sind.

10. Verfahren zum Betrieb eines Systems gemäß den Ansprüchen 1 bis 9, aufweisend mehrere Roboter Rᵢ, mit i = 1, 2, 3, ..., n, und n ≥ 2, einen Optimierer OE, eine Datenbank DB, die über ein Datennetz zum Datenaustausch miteinander vernetzt sind, wobei
- eine Steuereinheit SEᵢ den Roboter Rᵢ steuert; eine Speichereinheit SPEᵢ des Roboters Rᵢ Steuer- und/oder Regelungskommandos SDᵢ(Aₖ) speichert, die jeweils die Steuerung des Roboters Rᵢ entsprechend einer vorgegebenen Aufgabe Aₖ ermöglichen, mit k = 0, 1, 2, ..., m; über eine Einheit EEᵢ des Roboters Rᵢ eine neue Aufgabe Aₘ₊₁ für den Roboter Rᵢ vorgebbar ist, wobei gilt: Aₘ₊₁ ≠ Aₖ; eine Einheit EHᵢ des Roboters Rᵢ Steuer- und/oder Regelungskommandos SDᵢ(Aₘ₊₁) zur Ausführung der neuen Aufgabe Aₘ₊₁ erzeugt, eine Bewertungseinheit BEᵢ, die den von der Einheit EHᵢ ermittelten Steuerungsdatensatz SDᵢ(Aₘ₊₁) hinsichtlich zumindest eines Parameters P1 mit der Kennzahl K_{P1}(SDᵢ(Aₘ₊₁)) bewertet,
- der Optimierer OE nach Anforderung durch einen Roboter Rᵢ zumindest hinsichtlich eines vorgegebenen Parameters P2 optimierte Steuer- und/oder Regelungskommandos SD_{i,P2}(Aₘ₊₁) der neuen Aufgabe Aₘ₊₁ ermittelt, wobei die Anforderung durch den Roboter Rᵢ dann erfolgt, wenn die Kennzahl K_{P1}(SDᵢ(Aₘ₊₁)) einer vorgegebenen Bedingung nicht genügt, wobei eine Rechenleistung und ein Parallelisierungsgrad des Optimierers um ein Vielfaches höher ist als eine Rechenleistung und ein Parallelisierungsgrad einer Einheit EHᵢ, und
- die Datenbank DB die den von dem Optimierer OE optimierten Steuer- und/oder Regelungskommandos SD_{i,P2}(Aₘ₊₁) speichert und an den Roboter Rᵢ bereitstellt, wobei der Roboter Rᵢ die neue Aufgabe Aₘ₊₁ mit den Steuer- und/oder Regelungskommandos SD_{i,P2}(Aₘ₊₁) ausführt.

## Claims

1. System for generating optimized open and/or closed loop control commands for networked robots, including a plurality of robots Rᵢ, wherein i = 1, 2, 3, ..., n and n ≥ 2, an optimizer OE and a database DB which are networked with each other via a data network, wherein
- each robot Rᵢ has at least: a control unit SEᵢ for open and/or closed loop control of the robot Rᵢ; a storage unit SPEᵢ in which open and/or closed loop control commands SDᵢ(Aₖ) that enable control of the Robot Rᵢ respectively according to a predetermined task Aₖ are stored, wherein k = 0, 1, 2, ..., m; a unit EEᵢ for specifying a new task Aₘ₊₁ for the robot Rᵢ, wherein Aₘ₊₁ ≠ Aₖ; a unit EHᵢ for generating open and/or closed loop control commands SDᵢ(Aₘ₊₁) for the execution of the new task Aₘ₊₁ by the robot Rᵢ, an evaluation unit BEᵢ which evaluates the open and/or closed loop control commands SDᵢ(Aₘ₊₁) determined by the unit EHᵢ with regard to at least one parameter P1 with the characteristic number K_{P1}(SDᵢ(Aₘ₊₁)), and a communication unit KEᵢ for communicating with the optimizer OE and/or the database DB and/or other robots R_{j≠i}, wherein the robot Rᵢ is designed and configured to submit a request to optimize the open and/or closed loop control commands SDᵢ(Aₘ₊₁) to the optimizer OE if the characteristic number K_{P1}(SDᵢ(Aₘ₊₁)) does not satisfy a predetermined condition,
- the optimizer is OE is designed and configured, upon receiving the request from a robot Rᵢ to determine open and/or closed loop control commands SD_{i,P2}(Aₘ₊₁) of the new task Aₘ₊₁ that are optimized with regard to at least one predetermined parameter P2, wherein a computing power and a degree of parallelization of the optimizer is multiple times greater than a computing power and degree of parallelization of a unit EHᵢ, and
- the database DB stores the open and/or closed loop control commands SD_{i,P2}(Aₘ₊₁) optimized by the optimizer OE and makes them available to the robot Rᵢ, wherein the robot Rᵢ executes the new task Aₘ₊₁ with the open and/or closed loop control commands SD_{i,P2}(Aₘ₊₁).

2. System according to claim 1, in which the parameter P1 and parameter P2 are identical.

3. System according to Claim 1 or 2, in which the parameter P1 and/or the parameter P2 is/are a partial energy consumption or a total energy consumption of the robot in the execution of the respective open and/or closed loop control command SDᵢ, or a total time that the robot needs to execute the respective open and/or closed loop control command SDᵢ, or a combination thereof.

4. System according to any one of Claims 1 to 3, in which each unit EHᵢ is designed and configured to be self-learning, wherein the open and/or closed loop control commands SDᵢ(Aₘ₊₁) are generated on the basis of the open and/or closed loop control commands SDᵢ(Aₖ) for k = 0 to m.

5. System according to Claim 4, in which the unit EHᵢ is designed and configured such that the open and/or closed loop control commands SDᵢ(Aₘ₊₁) are generated on the basis of the characteristic numbers K(SDᵢ(Aₖ)).

6. System according to any one of Claims 1 to 5, in which the optimizer OE is designed to be self-learning, wherein the determination of the optimized open and/or closed loop control commands SD_{i,P2}(Aₘ₊₁) is carried out on the basis of previously determined optimized open and/or closed loop control commands SD_{i,P2}.

7. System according to any one of Claims 1 to 6, in which the optimizer OE is designed as a collaborative agent system in the data network, which comprises at least the units EHᵢ as agents, wherein the optimized open and/or closed loop control commands SD_{i,P2}(Aₘ₊₁) are generated in one, or more, or all units EHᵢ.

8. System according to any one of Claims 1 to 7, in which the generation of the optimized open and/or closed loop control commands SD_{i,P2}(Aₘ₊₁) is carried out by the optimizer OE using the open and/or closed loop control commands SDᵢ(Aₖ) with k = 0, 1, ..., m stored on the memory units SPEᵢ.

9. System according to any one of Claims 1 to 8, in which the characteristic figures K_{P1}(SDᵢ(Aₖ)) are stored in the storage unit SPEᵢ.

10. Method for operating a system according to any of Claims 1 to 9, including a plurality of robots Rᵢ, wherein i = 1, 2, 3, ..., n and n ≥ 2, an optimizer OE, a database DB which are networked with each other via a data network for the purpose of exchanging data, wherein
- a control unit SEᵢ controls the robot Rᵢ; a storage unit SPEᵢ of the robot Rᵢ stores open and/or closed loop control commands SDᵢ(Aₖ) that enable control of the robot Rᵢ respectively according to a predetermined task Aₖ are stored, wherein k = 0, 1, 2, ..., m; a new task Aₘ₊₁ can be assigned for the robot Rᵢ via a unit EEᵢ, wherein: Aₘ₊₁ ≠ Aₖ; a unit EHᵢ of the robot Rᵢ generates open and/or closed loop control commands SDᵢ(Aₘ₊₁) for the execution of the new task Aₘ₊₁, an evaluation unit BEᵢ which evaluates the control dataset SDᵢ(Aₘ₊₁) determined by the unit EHᵢ with regard to at least one parameter P1 with the characteristic number K_{P1}(SDᵢ(Aₘ₊₁)),
- upon receiving the request from a robot Rᵢ, the optimizer OE determines open and/or closed loop control commands SD_{i,P2}(Aₘ₊₁) of the new task Aₘ₊₁ that are optimized with regard to at least one predetermined parameter P2, wherein the request is submitted by the robot Rᵢ when the characteristic number K_{P1}(SDᵢ(Aₘ₊₁)) does not satisfy a specified condition, wherein a computing power and a degree of parallelization of the optimizer is multiple times greater than a computing power and degree of parallelization of a unit EHᵢ, and
- the database DB stores the open and/or closed loop control commands SD_{i,P2}(Aₘ₊₁) optimized by the optimizer OE and makes them available to the robot Rᵢ, wherein the robot Rᵢ executes the new task Aₘ₊₁ with the open and/or closed loop control commands SD_{i,P2} (Aₘ₊₁).

## Revendications

1. Système OK de création de commandes optimisées de contrôle et/ou de réglage pour des robots en réseau, présentant plusieurs robots Rᵢ, sachant que i = 1, 2, 3, ..., n, et n ≥ 2, un optimiseur OE, et une banque de données DB qui sont mis en réseau les uns avec les autres par un réseau de données,
- chaque robot Rᵢ présentant au moins : une unité de commande SEᵢ pour la commande ou le réglage du robot Rᵢ ; une unité de mémoire SPEᵢ dans laquelle des commandes de contrôle et/ou de réglage SDᵢ(Aₖ) qui permettent respectivement la commande du robot Rᵢ en fonction d'une tâche prédéfinie Aₖ, sachant que k = 0, 1, 2,... m sont enregistrées ; une unité EEᵢ pour la spécification d'une nouvelle tâche Aₘ₊₁ pour le robot Rᵢ, sachant qu'on a Aₘ₊₁ ≠ Aₖ ; une unité EHᵢ pour la génération de commandes de contrôle et/ou de réglage SDᵢ(Aₘ₊₁) pour l'exécution de la nouvelle tâche Aₘ₊₁ par le robot Rᵢ, une unité d'évaluation BEᵢ, qui évalue les commandes de contrôle et/ou de réglage SDᵢ(Aₘ₊₁) en ce qui concerne au moins un paramètre P1 avec l'indicateur K_{P1}(SDᵢ(Aₘ₊₁)), et une unité de communication KEᵢ pour la communication avec l'optimiseur OE et/ou la banque de données DB et/ou d'autres robots R_{j#i} que ces, le robot Rᵢ étant conçu et réalisé pour imposer une exigence d'optimisation des commandes de contrôle et/ou de réglage SDᵢ(Aₘ₊₁) à l'optimiseur OE dans la mesure où l'indicateur K_{P1}(SDᵢ(Aₘ₊₁)) ne satisfait pas à une condition prédéfinie,
- l'optimiseur OE étant réalisé et conçu pour, sur demande d'un robot Rᵢ du moins en ce qui concerne un paramètre prédéfini P2, déterminer des commandes optimisées de contrôle et/ou de réglage SD_{i,P2}(Aₘ₊₁) de la nouvelle tâche Aₘ₊₁, une puissance de calcul et un degré de parallélisation de l'optimiseur étant de multiples fois supérieurs à une capacité de calcul et à un degré de parallélisation d'une unité EHᵢ, et
- la banque de données DB, qui enregistre les commandes de contrôle et/ou de réglage SD_{i,P2}(Aₘ₊₁) optimisées par l'optimiseur OE et les met à disposition du robot Rᵢ, le robot Rᵢ exécutant la nouvelle tâche Aₘ₊₁ avec les commandes de contrôle et/ou de réglage SD_{i,P2}(Aₘ₊₁).

2. Système selon la revendication 1, dans lequel le paramètre P1 et le paramètre P2 sont identiques.

3. Système selon la revendication 1 ou 2, dans lequel le paramètre P1 et/ou le paramètre P2 sont une consommation d'énergie partielle ou une consommation d'énergie totale du robot lors de l'exécution de la commande de contrôle et/ou de réglage SDᵢ, ou une durée totale qu'il faut au robot pour exécuter les commandes de contrôle et/ou de réglage SDᵢ respectives ou leur combinaison.

4. Système selon une des revendications 1 à 3, dans lequel l'unité EHᵢ est réalisée et conçue respectivement pour un auto-apprentissage, la génération des commandes de contrôle et/ou de réglage SDᵢ(Aₘ₊₁) ayant lieu sur la base des commandes de contrôle et/ou de réglage SDᵢ(Aₖ) pour k = 0 à m.

5. Système selon la revendication 4, dans lequel l'unité EHᵢ est réalisée et conçue pour que la génération de la commande de contrôle et/ou de réglage SDᵢ(Aₘ₊₁) ait lieu sur la base des indicateurs K(SDᵢ(Aₖ)).

6. Système selon une des revendications 1 à 5, dans lequel l'optimiseur OE est conçu pour un auto-apprentissage, la détermination des commandes de contrôle et/ou de réglage SD_{i,P2}(Aₘ₊₁) optimisées ayant lieu sur la base de commandes de contrôle et/ou de réglage SD_{i,P2} optimisées déjà déterminées.

7. Système selon une des revendications 1 à 6, dans lequel l'optimiseur OE est conçu sous forme d'un système d'agent collaboratif dans le réseau de données qui comprend au moins des unités EHᵢ faisant office d'agents, la génération des commandes de contrôle et/ou de réglage SD_{i,P2}(Aₘ₊₁) optimisées ayant lieu dans une, dans plusieurs ou dans toutes les unités EHᵢ.

8. Système selon une des revendications 1 à 7, dans lequel la génération des commandes de contrôle et/ou de réglage SD_{i,P2}(Aₘ₊₁) optimisées par l'optimiseur OE a lieu en utilisant les commandes de contrôle et/ou de réglage SDᵢ(Aₖ) enregistrées sur les unités de mémoire SPEᵢ avec k = 0, 1,... m.

9. Système selon une des revendications 1 à 8, dans lequel, dans l'unité de mémoire SPEᵢ, sont enregistrés les indicateurs K_{P1}(SDᵢ(Aₖ)).

10. Procédé d'utilisation d'un système selon les revendications 1 à 9, présentant plusieurs robots Rᵢ, sachant que i = 1, 2, 3, ..., n, et n ≥ 2, un optimiseur OE, une banque de données DB qui sont mis en réseau les uns avec les autres par un réseau de données pour l'échange de données,
- une unité de commande SEᵢ commandant le robot Rᵢ ; une unité de mémoire SPEᵢ du robot Rᵢ sauvegardant des commandes de contrôle et/ou de réglage SDᵢ(Aₖ) qui permettent respectivement la commande du robot Rᵢ en fonction d'une tâche prédéfinie Aₖ, sachant que k = 0, 1, 2, ... m ; par une unité EEᵢ du robot Rᵢ, une nouvelle tâche Aₘ₊₁ étant prescriptible pour le robot Rᵢ, sachant qu'on a : Aₘ₊₁ ≠ Aₖ ; une unité EHᵢ du robot Rᵢ générant des commandes de contrôle et/ou de réglage SDᵢ(Aₘ₊₁) pour l'exécution de la nouvelle tâche Aₘ₊₁, une unité d'évaluation BEᵢ évaluant l'enregistrement de données de commande SDᵢ(Aₘ₊₁) déterminé par l'unité EHᵢ en ce qui concerne au moins un paramètre P1 avec l'indicateur K_{P1}(SDᵢ(Aₘ₊₁)),
- l'optimiseur OE, sur demande d'un robot Rᵢ du moins en ce qui concerne un paramètre prédéfini P2, déterminant des commandes de contrôle et/ou de réglage SD_{i,P2}(Aₘ₊₁) optimisées au niveau d'un paramètre P2 prédéfini P2 de la nouvelle tâche Aₘ₊₁, la demande par le robot Rᵢ ayant lieu si l'indicateur K_{P1}(SDᵢ(Aₘ₊₁)) ne satisfait pas à une condition prédéfinie, une puissance de calcul et un degré de parallélisation de l'optimiseur étant de multiples fois supérieurs à une capacité de calcul et à un degré de parallélisation d'une unité EHᵢ, et
- la banque de données DB enregistrant les commandes de contrôle et/ou de réglage SD_{i,P2}(Aₘ₊₁) optimisées par l'optimiseur OE et les mettant à disposition du robot Rᵢ, le robot Rᵢ exécutant la nouvelle tâche Aₘ₊₁ avec les commandes de contrôle et/ou de réglage SD_{i,P2}(Aₘ₊₁).
